# FASCICULE DE BREVET EUROPEEN

(11) **EP 2 816 369 B1**
(45) Date de publication et mention de la délivrance du brevet: **06.04.2016**
(21) Numéro de dépôt: 14171667.0
(22) Date de dépôt: 09.06.2014
(51) Int. Cl.: G01S 7/41, G01S 13/42, G01S 13/48, G01S 13/58, H01Q 3/26

(54) **Système de détection à émissions multiples simultanées et procédé de détection**
Erfassungssystem von mehreren gleichzeitigen Emissionen, und Erfassungsverfahren
Detection system with multiple simultaneous emissions and detection method

(30) Priorité: 21.06.2013 FR 1301453
(43) Date de publication de la demande: 24.12.2014
(73) Titulaire: Thales, 92200 Neuilly Sur Seine (FR)
(72) Inventeur: Desodt, Guy, 91300 Massy (FR); Plante, Jean-Luc, 91400 Orsay (FR); Guyvarch, Jean-Paul, 91430 Igny (FR)
(74) Mandataire: Lucas, Laurent Jacques

(56) Documents cités:
- EP-A1- 2 434 310
- US-B2- 6 977 610
- VINCENT PEREIRA ET AL: "Coloured transmission based on multicarrier phase coded signals in MIMO radar", RADAR CONFERENCE (RADAR), 2011 IEEE, IEEE, 23 mai 2011 (2011-05-23), pages 425-430, XP031902138, DOI: 10.1109/RADAR.2011.5960574 ISBN: 978-1-4244-8901-5
- YANPING ZHU ET AL: "The high resolution MIMO radar system based on minimizing the statistical coherence of compressed sensing matrix", JOURNAL OF ELECTRONICS (CHINA), SP SCIENCE PRESS, HEIDELBERG, vol. 29, no. 6, 30 octobre 2012 (2012-10-30), pages 572-579, XP035131362, ISSN: 1993-0615, DOI: 10.1007/S11767-012-0852-5
- CHEVALIER F L ET AL: "Coloured transmission for radar active antenna", REE: REVUE GENERALE DE L'ELECTRICITE ET DE L'ELECTRONIQUE, REVUE GENERALE DE L'ELECTRICITE S.A, FR, no. 6, 1 mars 2005 (2005-03-01), pages 48-52, XP001536744, ISSN: 1265-6534, DOI: 10.3845/REE.2005.024
- D.L Donoho: "Compressed sensing", IEEE Transactions on Information Theory, 1 janvier 2006 (2006-01-01), pages 1289-1306, XP055115154, DOI: 10.1109/TIT.2006.871582 Extrait de l'Internet: URL:http://ieeexplore.ieee.org/xpls/abs_al l.jsp?arnumber=1614066
- MATTHEW HERMAN ET AL: "Compressed sensing radar", RADAR CONFERENCE, 2008. RADAR '08. IEEE, IEEE, PISCATAWAY, NJ, USA, 26 mai 2008 (2008-05-26), pages 1-6, XP031376376, ISBN: 978-1-4244-1538-0

## Description

La présente invention concerne un système de détection à émissions multiples simultanées. Elle se rapporte également à un procédé de détection utilisant les émissions multiples simultanées.

L'invention s'applique notamment dans le domaine des radars à émissions multiples simultanées encore appelés radars MIMO (« Multiple Input Multiple Output ») ou radars MISO (« Multiple Input Single Output »). Il peut s'agir de radars terrestres, navals, aéroportés ou spatiaux. L'invention peut également s'appliquer aux sonars actifs.

Parmi les fonctions diverses d'un radar, une fonction est de détecter des objets lents et de faible réflectivité, comme des drones notamment. Pour détecter des objets lents en présence de fouillis, il faut avoir une bonne résolution Doppler donc une grande durée d'observation cohérente. Pour conserver une bonne précision angulaire, une solution consiste à employer un faisceau d'émission élargi et une grappe de faisceaux de réception qui couvre l'ensemble du faisceau d'émission. Dans une solution classique on élargit le faisceau par une loi de phase. Cependant cette solution ne permet pas d'obtenir l'isolation nécessaire entre la cible recherchée de faible réflectivité et de faible vitesse, par exemple un drone, et les véhicules au sol, de même vitesse et de réflectivité nettement plus forte. Une autre solution consiste à élargir le faisceau par émissions multiples simultanées ; cette solution est décrite ci-dessous. On verra qu'elle ne répond que partiellement au besoin, en effet certains lobes secondaires peuvent être réduits mais ils restent encore trop élevés ou en trop grande quantité.

L'émission multiple simultanée, encore appelée émission colorée, consiste à émettre des signaux différents en fonction des sous-réseaux de l'antenne d'émission, et à réaliser ainsi un codage spatio-temporel de l'espace. Ces signaux se combinent dans l'espace selon des jeux de phase ou des retards qui dépendent de la direction visée. Il en résulte un signal global qui diffère d'une direction à l'autre. A la réception, pour détecter un signal issu d'une direction donnée, le traitement effectue un filtrage adapté au signal associé à cette direction. Ce filtre n'est pas adapté aux signaux issus des autres directions puisque le signal n'est plus le même dans ces autres directions. Cependant les signaux des différentes directions sont tous issus des mêmes signaux élémentaires. Il en résulte une corrélation qui fait que le filtre adapté à une direction ne produit pas un zéro parfait lorsqu'il reçoit un signal provenant d'une autre direction. Ce niveau correspond à un lobe secondaire de la fonction d'ambiguïté.

Des analyses effectuées sur une grande variété de codes montrent que la plupart des codes analysés produisent des lobes secondaires dont le niveau dépasse le niveau souhaité dans certaines zones de l'espace angle-distance-Doppler. Les rares codes qui atteignent presque l'objectif de réduction de niveau élargissent significativement le lobe principal, ce qui les rend finalement peu utiles en raison du manque de discrimination que cela entraîne. En conclusion, aucun des codes d'émissions multiples simultanées analysés ne satisfait le besoin opérationnel.

Un problème à résoudre pour ces radars de type MIMO ou MISO est donc la réduction des lobes secondaires de la fonction d'ambiguïté angle-distance-Doppler.

Un document US 6 977 610 B2 ayant notamment pour but d'augmenter la sensibilité de détection radar présente une solution utilisant l'association de deux radars qui émettent simultanément vers une même cible et reçoivent tous deux les échos issus des deux émissions et les associent. La solution n'indique pas comment supprimer les échos parasites issus de lobes secondaires ;

Un document EP 2434310 A1 décrit un traitement de réception, par formation de faisceau par le calcul, visant à exploiter de façon optimale divers sous-réseaux d'antenne. Le document précise que ce traitement peut être associé à une émission multiple simultanée ou émission colorée. Cependant, la solution décrite dans ce document ne traite pas de la réduction des lobes secondaires de la fonction d'ambiguïté angle-distance-Doppler.

Un document VINCENT PEREIRA et Al : « Coloured transmission based on multicarrier phase coded signais in MIMO radar », RADAR CONFERENCE, 2011 IEEE, 23 mai 2011, pages 425-430, divulgue un système de détection à émissions multiples simultanées.

Un but de l'invention est notamment de réduire le plus possible les lobes secondaires de la fonction d'ambiguïté notamment d'un radar à émissions multiples simultanées. A cet effet, l'invention a pour objet un système de détection à émissions multiples simultanées comportant une antenne composée de sous-réseaux d'émission éclairant une même zone de l'espace et au moins un sous-réseau de réception, chaque sous-réseau ayant une position donnée dans ledit réseau, chaque sous-réseau d'émission émettant un signal ayant une caractéristique propre, l'ensemble des caractéristiques propres à chaque sous-réseau formant le code d'émissions multiples simultanées, la détection de cibles étant réalisée par l'émission d'une suite de rafales d'émissions multiples, ladite suite comportant au moins deux codes d'émission différents, des échos étant présents dans lobe principal et dans des lobes secondaires de la fonction d'ambiguïté, ledit système :
- émettant des codes différents parmi au moins deux rafales, ladite émission conservant le lobe principal de la fonction d'ambiguïté mais orientant lesdits lobes secondaires de ladite fonction d'ambiguïté dans des directions différentes de rafale à rafale ;
- détectant les signaux issus de chaque direction ;
- effectuant l'association des différents signaux détectés dans chaque direction pour lesdites au moins deux rafales, ladite association réduisant le niveau des échos présents dans lesdits lobes secondaires, variables de rafale à rafale, de la fonction d'ambiguïté.

Dans un mode de réalisation particulier, lesdits au moins deux codes d'émission sont consécutifs. Lesdits au moins deux codes sont par exemple répétés à l'intérieur de ladite suite de rafales.

L'émission comportant N codes différents, un par rafale, l'association est par exemple réalisée selon un critère « 2 sur N » ou selon un critère « K sur N », K étant supérieur à 2.

L'association se fait par exemple selon un traitement du type « Compressed Sensing » ou selon un traitement du type maximum de vraisemblance.

Un code d'émissions multiples simultanées est par exemple réalisé en attribuant à chaque sous-réseau d'émission une sous-bande de fréquence. Dans un mode de réalisation possible, les centres de phase desdits sous-réseaux d'émission sont alignés selon un axe.

Ledit système comportant plusieurs sous-réseaux de réception, lesdits sous-réseaux ne sont pas colocalisés, chaque sous-réseau de réception recevant les signaux issus des différentes émissions produites par lesdits sous-réseaux d'émission.

L'invention a également pour objet un procédé de détection à émissions multiples simultanées utilisant une antenne composée de sous-réseaux d'émission éclairant une même zone de l'espace et au moins un sous-réseau de réception, chaque sous-réseau ayant une position donnée dans ledit réseau, procédé dans lequel :
- on attribue à chaque sous-réseau d'émission un signal d'émission ayant une caractéristique propre, l'ensemble des caractéristiques propres à chaque sous-réseau formant le code d'émissions multiples simultanées, la détection de cibles étant réalisée par l'émission d'une suite de rafales d'émissions multiples, ladite suite comportant au moins deux codes d'émission différents, des échos étant présents dans lobe principal et dans des lobes secondaires de la fonction d'ambiguïté,
- on émet des codes différents parmi au moins deux rafales, ladite émission conservant le lobe principal de la fonction d'ambiguïté mais orientant les lobes secondaires de ladite fonction d'ambiguïté dans des directions différentes de rafale à rafale ;
- on détecte les signaux issus de chaque direction;
- on effectue l'association des différents signaux détectés dans chaque direction pour lesdites au moins deux rafales, ladite association réduisant le niveau des échos présents dans les lobes secondaires, variables de rafale à rafale, de la fonction d'ambiguïté.

D'autres caractéristiques et avantages de l'invention apparaîtront à l'aide de la description qui suit, faite en regard de dessins annexés qui représentent :
- la figure 1, une illustration des lobes secondaires d'ambiguïté d'un radar à émissions multiples simultanées ;
- la figure 2, un exemple de lobe principal et de lobes secondaires correspondant à un code d'émissions multiples simultanées ;
- la figure 3, un exemple de lobe principal et de lobes secondaires correspondant à un code d'émissions multiples simultanées permettant de réduire les lobes secondaires ;
- les figures 4a à 4d, une illustration du principe de l'invention;
- les figures 5a à 5c, une illustration d'un résultat obtenu par l'invention ;
- la figure 6, un exemple de réalisation possible d'un radar selon l'invention ;
- les figures 7a à 7b, des exemples de codage d'émissions multiples simultanées pouvant être mises en oeuvre par l'invention.

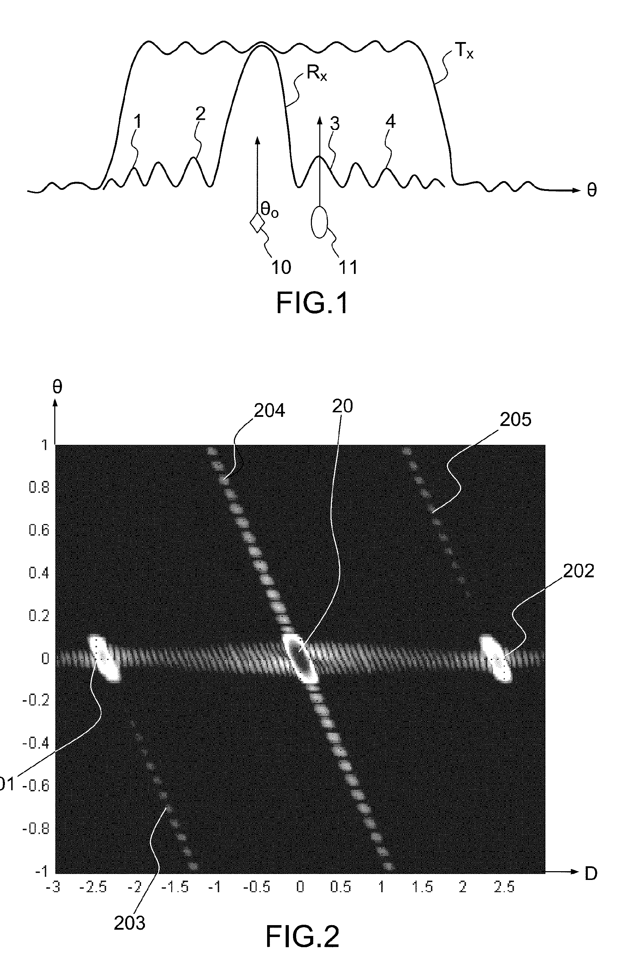

La figure 1 illustre les lobes secondaires d'ambiguïté d'un radar à émissions multiples simultanées. En règle générale, le terme « fonction d'ambiguïté » est associé à une fonction dépendant d'au moins deux variables, la distance et le Doppler par exemple. La figure 1 ne décrit qu'une variable. En d'autres termes, la figure 1 décrit le phénomène par rapport à l'angle. La figure 2 ci-après décrira plus complètement le phénomène qui joue en réalité sur l'angle et la distance.

Dans une structure selon l'art antérieur, plusieurs éléments d'émission émettent chacun un signal caractéristique. Un ou plusieurs éléments de réception effectuent un traitement qui exploite la connaissance du signal rayonné en fonction de la direction, donc du codage de l'espace.

Plus particulièrement, la figure 1 montre l'amplitude du faisceau d'émission Tx correspondant à un sous-réseau d'antenne, en fonction de l'angle θ. La largeur du faisceau, fonction de la dimension du sous-réseau d'antenne, présente une largeur donnée.

La figure 1 montre aussi un faisceau de réception Rx dans une direction définie par un angle θ₀, plus étroit. Comme indiqué précédemment l'émission multiple simultanée consiste à émettre des signaux différents, un signal étant associé à chaque sous-réseau qui émet à partir d'une position donnée dans l'antenne. Ces signaux se combinent dans l'espace pour fournir un signal global qui diffère d'une direction à l'autre. Le signal dans une direction donnée résulte d'une combinaison des signaux issus des différents sous-réseaux. Le signal dans une autre direction résulte d'une autre combinaison des mêmes signaux issus des différents sous-réseaux.

A la réception, pour détecter un signal issu d'une direction donnée θ₀, le traitement effectue un filtrage adapté au signal associé à cette direction. Cependant les signaux des autres directions sont tous issus des mêmes signaux élémentaires. Par un effet de corrélation, le filtre adapté à la direction θ₀ ne produit pas un zéro parfait lorsqu'il reçoit un signal dans une autre direction. Ce niveau de réception correspond à un lobe secondaire 1, 2, 3, 4. La figure 1 illustre par ailleurs les inconvénients de ces lobes secondaires. En effet une cible 11 de grande surface équivalente radar (SER), présente dans un lobe secondaire, peut être détectée comme une cible 10 de faible SER présente dans le lobe principal de réception.

La figure 2 présente, pour un code d'émission multiple simultanée, le lobe principal 20 en réception flanqué de deux lobes secondaires 201, 202 dans le domaine angles-distances, les abscisses représentant la distance à la cible et les ordonnées représentant l'angle de réception, c'est-à-dire la direction. Le codage, utilisé pour s'approcher au mieux de l'objectif d'élimination ou au moins de réduction forte des lobes secondaires, laisse apparaître cependant des lobes secondaires trop élevés dans certaines zones (angle-direction) 203, 204, 205.

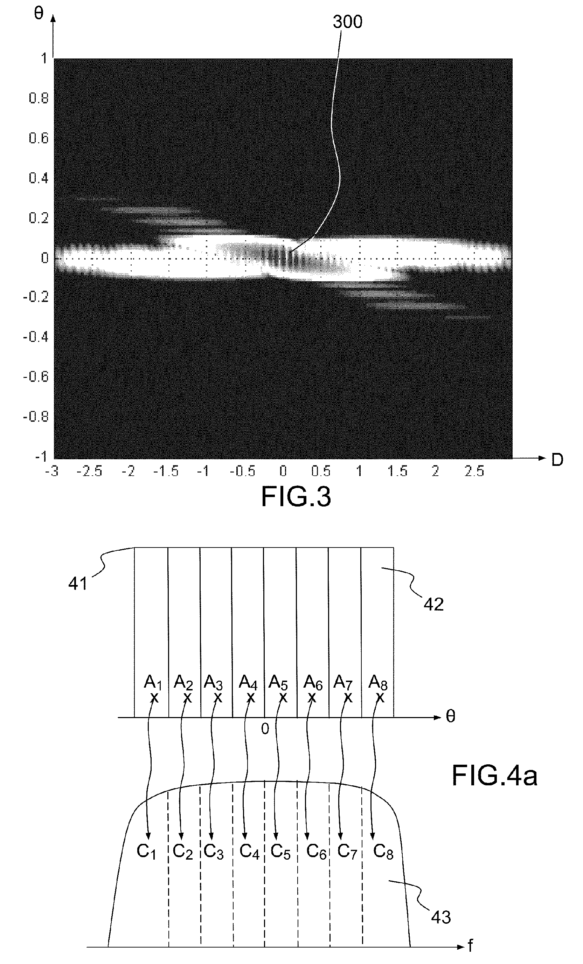

La figure 3 illustre un cas correspondant à quelques codes qui permettent d'approcher les contraintes sur les lobes secondaires mais au prix d'un lobe principal 300 fortement élargi donc non discriminant. Les figures 1 à 3 illustrent les limites des émissions multiples simultanées selon l'art antérieur.

Les figures 4a à 4d illustrent le principe de l'invention à l'aide d'un cas particulier et simple. La solution selon l'invention consiste à émettre non pas un seul code d'émission multiple mais successivement des codes différents, d'une rafale à l'autre, et combiner les réponses obtenues à l'aide d'un traitement non linéaire. Il est possible de prévoir que le code ne varie pas entre deux rafales successives mais parmi plus de 2 rafales, non nécessairement successives.

La figure 4a présente un réseau d'antennes 41 comportant par exemple huit sous-réseaux d'antennes 42. Un sous-réseau d'antenne peut-être constitué d'une seule antenne ou plusieurs antennes élémentaires ou éléments d'antenne, des éléments rayonnant par exemple. Ces derniers peuvent être alignés.

Chaque sous-réseau émet selon un code. Un code est affecté à chaque sous-réseau 42. Chaque code est affecté à un sous-réseau et à un seul. La figure 4a illustre le codage de l'émission pour une rafale d'ordre M. Un premier sous-réseau A₁ émet selon un code C₁, un deuxième sous-réseau A₂ émet selon un code C₂ et ainsi de suite jusqu'au dernier sous-réseau A₈ qui émet selon un code C₈. Dans l'exemple de la figure 4a, un code Ci correspond à l'allocation d'une sous-bande de fréquences 43, à un sous-réseau.

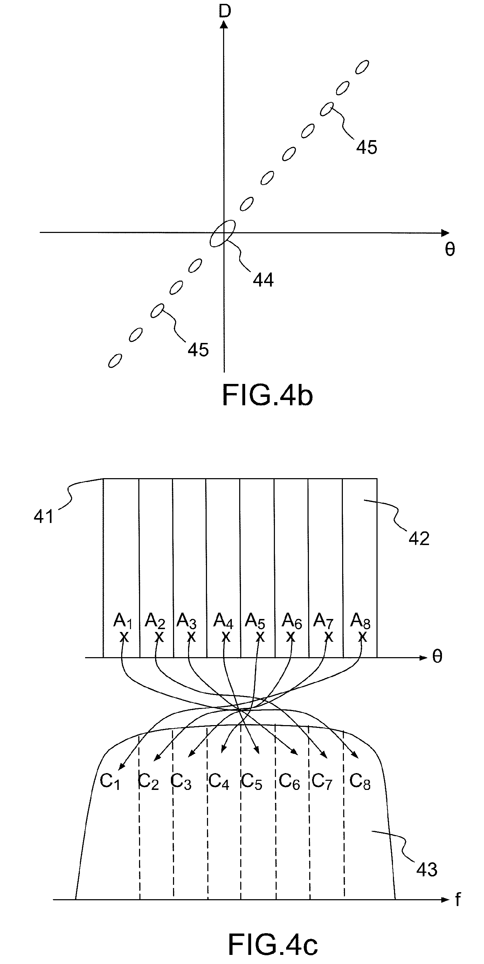

La figure 4b montre la fonction d'ambiguïté des signaux reçus correspondant à l'émission de la figure 4a, représentée dans le domaine angles-distances. Le lobe principal 44 est situé à l'origine des axes. Les lobes secondaires 45 sont alignés de chaque côté de ce lobe principal 44 selon une distance qui croît de façon linéaire en fonction de l'angle θ.

La figure 4c illustre le codage de l'émission à la rafale suivante, M+ 1, pour le même réseau que celui de la figure 4a. Dans cet exemple, on inverse l'affectation des codes Ci, c'est-à-dire des sous-bandes 43, par rapport à la position des sous-réseaux. En conséquence, le premier sous-réseau A₁ émet selon le code C₈, le deuxième sous-réseau A₂ selon le code C₇ et ainsi de suite, le huitième sous-réseau A₈ émettant selon le code C1.

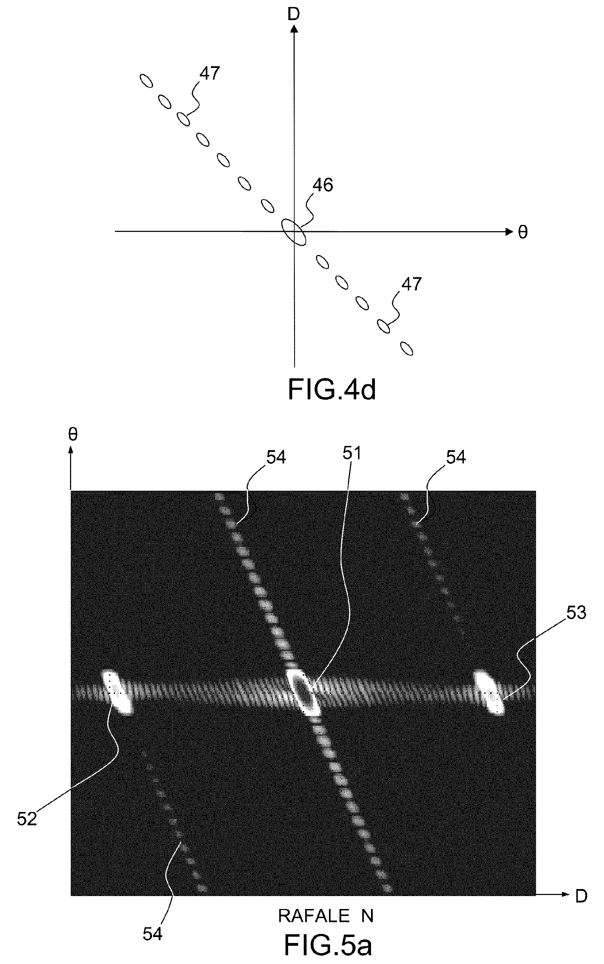

La figure 4d montre la fonction d'ambiguïté des signaux reçus correspondant à l'émission de la figure 4c dans le même domaine angles-distances que celui de la figure 4b. Il y a toujours un lobe principal 46 à l'origine des axes et des lobes secondaires toujours alignés de chaque côté de ce lobe principal. Cependant l'alignement est orienté différemment, il est symétrique à l'alignement précédent par rapport à l'axe des angles.

On peut alors par un traitement adapté supprimer les lobes secondaires 45, 47 qui ne sont pas positionnés aux même endroits d'une rafale à l'autre et ne conserver que le lobe principal 44, 46. Dans un cas de mise en oeuvre où les changements de codes se font d'une rafale à l'autre, le code de la rafale M+2 est le même que pour la rafale M, le code de la rafale M+3 étant le même que celui de la rafale M+1 et ainsi de suite.

Avantageusement, l'invention utilise un principe semblable à celui en usage pour lever les ambiguïtés distance-Doppler. Dans ce dernier cas, on effectue l'émission de plusieurs rafales avec des ambiguïtés différentes puis l'association des signaux des différentes rafales par un traitement non linéaire. Le traitement le plus simple et le plus couramment utilisé demande la détection, dans une même cellule distance-Doppler sur au moins deux rafales. Dans le cas des émissions multiples successives selon l'invention, le traitement le plus simple demande la détection dans une même cellule angle-distance-Doppler sur au moins deux rafales.

La succession d'émissions multiples différentes présente l'avantage de très bien se combiner avec la variation d'ambiguïtés distance et Doppler de rafale à rafale. Celle-ci s'appuie sur une variation, de rafale à rafale, de la période de récurrence de récurrence et éventuellement de la fréquence d'émission. La solution proposée par l'invention consiste à faire varier, en plus, le code d'émission multiple simultanée comme illustré par le cas simple des figures 4a à 4d. Le traitement d'association des rafales, en vue de supprimer les lobes secondaires, peut rester inchangé une fois effectué les filtres adaptés aux codes émis par chaque rafale. Ce traitement implique la détection d'au moins deux rafales dans une même cellule angle-distance-Doppler. Il est bien sûr possible d'envisager d'autres traitements que celui basé sur la détection d'au moins deux rafales (critère 2 sur N). Pour la détection d'objets lents, a priori situés dans la première ambiguïté distance-Doppler, aucune rafale n'est occultée par les ambiguïtés et on peut remplacer le critère « 2 sur N » par un critère « K sur N » où K est supérieur à 2. Pour une valeur suffisante de N, c'est plus efficace en permettant notamment une meilleure probabilité de détection, pour une même probabilité de fausse alarme et une meilleure probabilité de réjection d'échos forts multiples.

L'exemple illustré par les figures 4a à 4d est un cas simple où il y a deux code produits dans deux rafales successives, la détection étant effectuées à partir de ces deux rafales. On peut prévoir des cas où les deux codes successifs peuvent être répétés plusieurs fois, sur N rafales. Dans ces cas où l'on traite davantage de rafales successives, en émettant que deux codes, le critère est 1+N/2 sur N. Par exemple avec N = 6, une cible bien placée répond sur les 6 rafales, une cible mal placée répond sur 3 rafales puisque le code qui lui convient est présent trois fois. Pour discriminer cette cible mal placée , il faut alors un critère 4 sur 6, ou 5 sur 6 ou 6 sur 6, et non 2 sur 6. Plus généralement, dans le cas où les codes se répètent dans la suite des rafales émises, le traitement 2 sur N n'est pas le mieux adapté. D'autres traitement peuvent avantageusement être utilisés.

On peut ainsi utiliser des traitements de type acquisition comprimée connus par ailleurs selon l'expression anglaise « compressed sensing ». Ces traitement de type « compressed sensing » permettent de construire un signal à partir d'un nombre réduit de mesures. Dans l'application à la présente association, on construit le signal de détection d'une cible à partir des mesures effectuées dans chaque direction, pour les codes d'émission multiple successifs.

Ces traitements appliqués aux formes d'ondes proposées permettent d'obtenir des performances supérieures à celles du critère 2 sur N ou même du critère K sur N. Ils optimisent la détection simultanée d'un ensemble de cibles. Des exemples de traitement du type « compressed sensing » sont notamment décrit dans le document « Compressed Sensing », de David L. Donoho, Department of Statistics, Standford University, September 2004, ou dans le document « Compressed sensing radar », de Matthew Herman et al, Department of Mathematics, University of California, 2008 IEEE.

On peut aussi envisager des traitements adaptatifs, par exemple du type Capon ou maximum de vraisemblance.

L'invention réalise donc notamment, dans un radar à émissions multiples simultanées, l'émission de codes différents de rafales à rafale et effectue l'association des différentes rafales par un traitement non linéaire, par exemple du type « 2 sur N », « K sur N », « compressed sensing », Capon ou Maximum de vraisemblance.

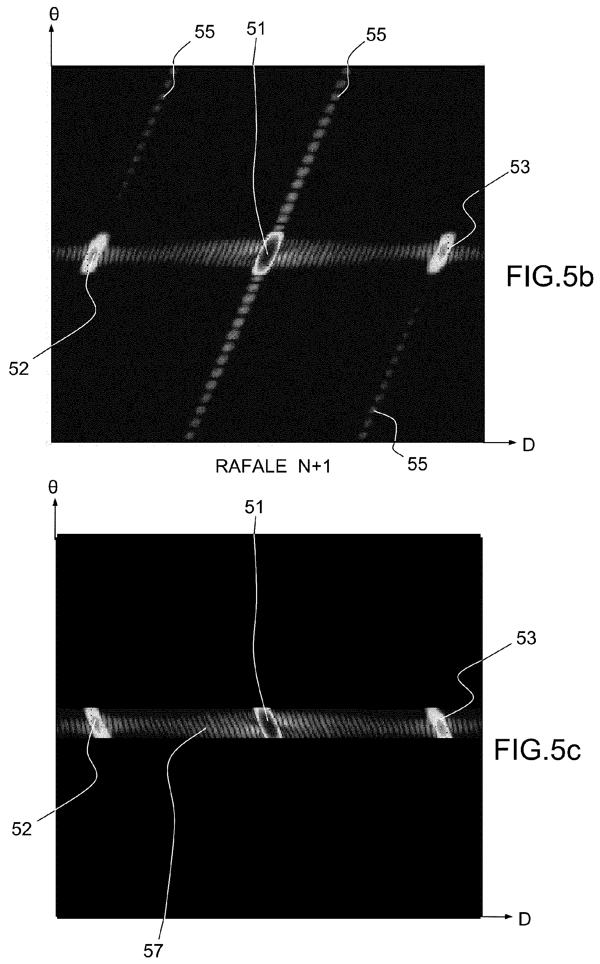

Les figures 5a, 5b et 5c illustrent un résultat obtenu par la mise en oeuvre de l'invention. Selon l'invention, plusieurs éléments d'émission émettent chacun plusieurs codes successivement, on obtient donc une succession d'émissions multiples simultanées selon des codes différents. Dans l'exemple de ces figures, la succession des codes s'établit sur deux rafales.

La figure 5a illustre les fonctions d'ambiguïtés pour un premier code émis dans la rafale d'ordre M et la figure 5b illustre les fonctions d'ambiguïté pour un deuxième code émis dans la rafale d'ordre M+1. Ces fonctions d'ambiguïtés correspondant à des lobes secondaires sont représentées dans le domaine angle-distance. La figure 5a présente un lobe principal 51 et deux premiers lobes secondaires 52, 53 ainsi qu'une multitude de lobes secondaires selon trois lignes 54 passant par les lobes précédents et orientées dans une même direction. La figure 5b présente le lobe principal 51 et les deux premiers lobes secondaires 52, 53 ainsi qu'une multitude de lobes secondaire selon trois lignes 55 passant par ces trois lobes 51,52, 53 et orientées dans une autre direction.

En réception, un ou plusieurs éléments de réception effectuent:
- un traitement qui exploite la connaissance du signal rayonné en fonction de la direction pour chaque émission multiple simultanée, au moyen d'un filtrage adapté . Ce traitement peut être effectué en sortie de la fonction de Formation de Faisceau par le Calcul (avec un filtre adapté par faisceau, dont les coefficients sont associés à la direction du faisceau), ou être effectué avant la Formation de Faisceau par le Calcul (avec un ensemble de filtres adaptés, chacun étant associé à l'une des directions des faisceaux que produit la FFC);
- Puis un traitement qui associe les réponses issues des émissions successives, ce traitement étant par exemple de type « 2 sur N », « K sur N » , « Compressed sensing », « Capon » ou « Maximum de Vraisemblance ».

L'exemple des figures 5a et 5b correspond à l'émission de deux codes successifs. Lors du traitement d'association, un critère « 2 sur 2 » revient à prendre, en chaque point, le 2^{ème} plus grand signal parmi les 2 signaux disponibles, c'est-à-dire de prendre le signal minimum.

La fonction d'ambiguïté issue de cette association est illustrée par la figure 5c. Il ne reste plus que le lobe principal 51 et les deux premiers lobes secondaires 52, 53 et des lobes secondaires 57 sur l'axe distance.

La figure 5c illustre par ailleurs l'efficacité de l'invention. On peut voir en effet que l'invention réduit très fortement le domaine angle-distance où un écho fort peut perturber la détection d'un écho faible. Dans l'exemple de la figure 5c, il apparaît que les lobes résiduels 57 sont presque tous sur l'axe distance. Il est possible de résoudre ces lobes secondaires selon l'état de l'art.

Le traitement de base de suppression des lobes secondaires d'une rafale à l'autre est de type « K sur N ». La valeur K = 2 est habituellement utilisée pour les cibles rapides tandis qu'une valeur supérieure est mieux adaptée pour la détection de cibles lentes et de faible réflectivité, étant en première trace de distance et vitesse, ils ne sont pas occultés par les éclipses distance et vitesse, et sont donc visibles sur les N rafales. On peut mettre en oeuvre deux chaînes d'association des signaux, l'une pour la détection de cibles rapides, avec K = 2, et l'autre pour la détection des cibles lentes, avec K > 2.

Plusieurs familles de codes d'émission multiple simultanée peuvent être utilisées. De préférence, on utilise des familles de codes permettant d'obtenir facilement l'objectif opérationnel. On peut ainsi choisir une contrainte qui impose des lobes secondaires peu nombreux ou localisés, comme par exemple les lobes secondaires 54 et 55 des figures 5a et 5b, en acceptant qu'ils soient relativement élevés. Etant peu nombreux et localisés, leur suppression par un critère K sur N est efficace et affecte peu la détection d'autres cibles. Les codes satisfaisant à cette contrainte sont nombreux et faciles à synthétiser. On en donnera quelques exemples par la suite.

Les figures qui suivent présentent des modes de réalisations possibles pour la génération des signaux et le traitement numérique des échos issus des émissions simultanées successives.

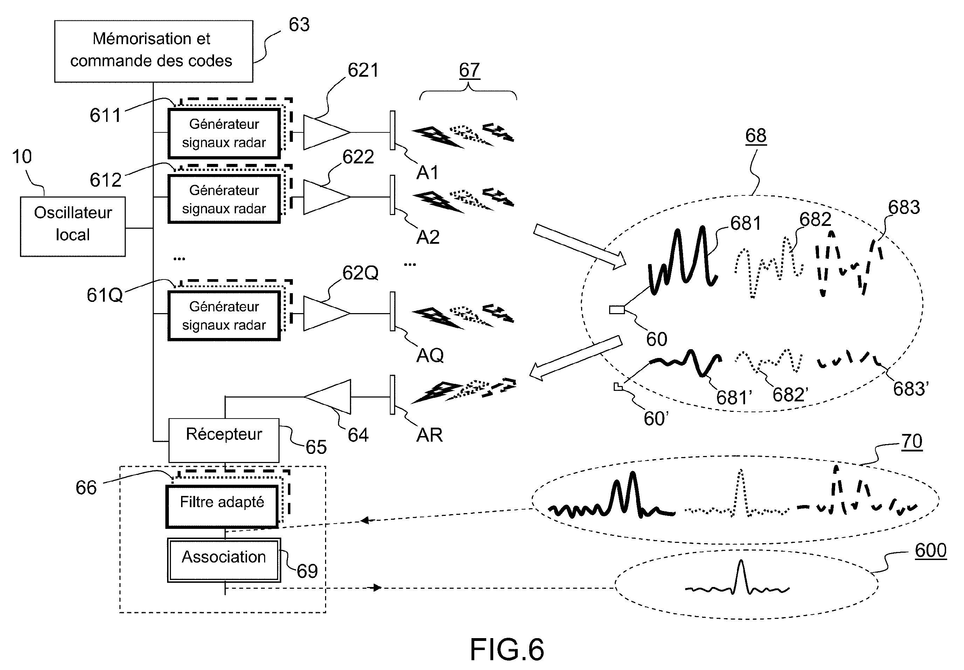

La figure 6 illustre un exemple de réalisation possible d'un radar selon l'invention. Le matériel nécessaire pour émettre des émissions multiples différentes d'une rafale à l'autre est essentiellement le même que pour un seul code d'émission multiple. Il faut prévoir notamment en plus la mémorisation numérique des codes et leurs commandes, ce qui est simple à mettre en oeuvre. Dans l'exemple de la figure 6, le radar comporte une antenne constituée de Q sous-réseaux d'émission A₁, A₂ ... A_{Q}. Chaque sous-réseau dispose d'un générateur de signaux 611, 612 ...61Q, par exemple programmable, capable d'émettre une caractéristique d'émission différente de rafale à rafale. Un amplificateur 621, 622, 62Q amplifie les signaux issus des générateurs 611, 612 ...61Q avant passage dans les sous-réseaux. Un oscillateur local 10 fournit une fréquence de base aux générateurs de fréquences. Les générateurs de signaux sont commandés par des moyens de commandes 63 mémorisant les différents codes affectés à chaque sous-réseau A₁, ... A_{Q} pour chaque rafale. Ces moyens de mémorisation et de commandes des codes sont par exemple intégrés dans les moyens de traitement radar. Dans l'exemple de la figure 6, l'émission comporte trois codages successifs 67, au lieu de deux dans l'exemple des figures 5a à 5d. Les moyens de mémorisation 63 doivent donc au moins mémoriser 3xQ codes différents.

L'antenne émet ainsi une succession de signaux multiples simultanés, selon une période de trois rafales.

A partir de cette succession de signaux d'émissions multiples simultanés, le radar reçoit une succession 68 de réponses de cibles. Pour une première cible 60 on reçoit un signal 681 correspondant au codage de la rafale M, un signal 682 correspondant au codage de la rafale M+1 et un signal 683 correspondant au codage de la rafale M+2. Pour une deuxième cible 60', on reçoit une autre série de signaux 681', 682', 683'.

A la réception, le radar comporte au moins une antenne AR ainsi que des moyens de réception 64, 65 comprenant au moins un amplificateur faible bruit 64 et un récepteur numérique par sous-réseau d'antenne.

Les moyens de réception 65 effectuent notamment les fonctions suivantes,
- Formation de faisceau par le calcul, capable de former une grappe de faisceaux recouvrant l'ensemble du diagramme d'émission Tx ;
- Compression d'impulsions effectuant, dans chaque faisceau formé, un filtre adapté 66 au signal rayonné dans la direction du faisceau ;
- Filtrage Doppler produisant un ensemble de filtres étroits ;
- Régulation de fausses alarmes associant TFAC (Taux de Fausse Alarme Constant, estimation sur les axes distance et Doppler) et carte de fouillis (estimation de balayage à balayage dans chaque cellule angle-distance, à Doppler faible) ;
- Détection par comparaison à un seuil ;
- Dépliement distance-Doppler ;
- Association 69 des signaux 70 détectés en sortie des filtres 66 pour les trois rafales, par exemple en deux types d'association :
   - Selon un critère « 2 sur N » en vue de détecter les cibles rapides ;
   - Selon un critère « K sur N » en vue de détecter les cibles lentes ;
      d'autres critères pouvant être utilisés, seuls subsistant en sortie de l'association la ou les échos 600 de cibles présentes dans la direction des filtres adaptés ;
- Extraction des données associée à chaque association par :
   - Regroupement des détections voisines en un amas de détections
   - Calcul de la position moyenne de chaque amas
   - Regroupement des informations en un plot
- Eventuellement un pistage réalisant :
   - Un chaînage des plots de tour à tour ;
   - Un calcul des paramètres de trajectoire.

Il est possible de modifier l'ordre des deux premières fonctions ci-dessus qui deviennent alors :
- Compression d'impulsions adaptées aux directions recouvrant l'ensemble du diagramme d'émission Tx ;
- Formation de faisceau par le calcul formant, pour chaque sortie de compression d'impulsion, le faisceau associé à la direction.

Quelques variantes de réalisation peuvent être mises en oeuvre, en particulier on peut prévoir un exemple de réalisation comportant une ou plusieurs des caractéristiques suivantes :
- L'antenne d'émission comporte un générateur par élément rayonnant, ceci revient à ce que chaque sous-réseau d'émission soit un seul élément d'antenne ;
- L'antenne d'émission dispose de sous-réseaux dont les centres sont alignés selon un seul axe, par exemple sous forme de poutres verticales espacées sur l'axe horizontal ou de poutres horizontales espacées sur l'axe vertical ;
- Les sous-réseaux d'antenne de réception ne sont pas localisés au même endroit et chaque sous-réseau de réception reçoit les échos issus des différentes émissions, le traitement qui rassemble les signaux issus des sous-réseaux distants pouvant alors se faire de façon cohérente ou non cohérente, l'exemple de la figure 6 présente un seul sous-réseau de réception mais il est bien sûr possible d'en prévoir plusieurs ;
- La grappe de faisceaux de réception comporte des faisceaux resserrés par exemple d'un facteur racine de 2 sur chaque axe pour anticiper le gain en résolution angulaire apporté par l'émission multiple simultanée ;
- L'antenne de réception comporte un récepteur par élément rayonnant, ceci revenant à ce que chaque sous-réseau de réception soit un seul élément d'antenne ;
- La compression d'impulsions effectue en parallèle plusieurs filtres, chacun adapté à une gamme de vitesses radiales. Ceci est notamment utile lorsque les codes sont sensibles au Doppler, codes qui peuvent être rendus intéressants en vue de la solution proposée ;
- Le filtrage Doppler peut ne pas être réalisé, pour une émission en rafales comportant une seule impulsion, ou comporter des filtres peu résolvants, pour des rafales comportant un faible nombre d'impulsions ;
- L'organe de régulation de fausse alarme effectue son estimation en s'appuyant sur les propriétés de chaque code émis, par exemple par une estimation sur une diagonale distance-angle ;
- L'association des rafales est effectuée selon un traitement « Compressed sensing », un seul traitement d'association peut alors convenir à la fois aux cibles lentes et aux cibles rapides ;
- L'association des rafales est effectué selon un traitement de type adaptatif, par exemple par une méthode des moindres carrés, Capon ou encore maximum de vraisemblance.

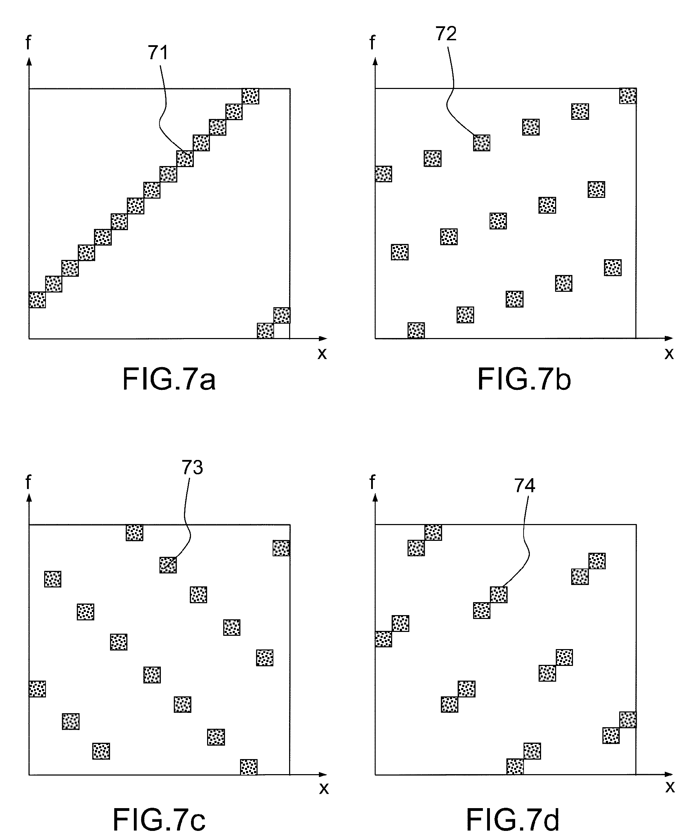

Les figures 7a à 7d illustrent des exemples de codage de l'espace, par émissions multiples simultanées, par des exemples d'allocation de fréquence aux sous-réseaux d'antenne répartis sur un seul axe. Les sous-bandes de fréquence allouées sont représentées en fonction de la position des sous-réseaux. Plus particulièrement les fréquences allouées sont représentées par des carrés 71, 72, 73, 74. Les dimensions de chaque carré représentent la sous-bande de fréquence selon l'axe des ordonnées et la dimension du sous-réseau selon l'axe des abscisses. Ces carrés forment des éléments d'une matrice comportant un seul élément par ligne et par colonne.

La figure 7a correspond à un codage analogue à celui de la figure 4a. Dans cet exemple, les fréquences augmentent de façon linéaire avec la position des sous-réseaux. Les carrés 72 de la figure 7b sont alignés régulièrement selon trois rampes croissantes décalées en fréquence. Dans la figure 7c, les carrés 73 sont alignés régulièrement selon trois rampes décroissantes décalées en fréquence. Dans la figure 7d, les carrés 74 sont regroupés par paires, les paires étant elles-mêmes alignées régulièrement selon des rampes décroissantes. Une paire est constituée de deux carrés contigus selon une de leurs diagonales. De nombreuses autres dispositions des carrés, et donc d'autres codages par allocation de fréquences par sous-réseaux, sont bien sûr possibles.

L'invention a été décrite pour des radars à émissions multiples simultanées. L'invention peut également avantageusement s'appliquer pour des sonars actifs fonctionnant selon le même principe d'émissions multiples.

## Revendications

1. Système de détection à émissions multiples simultanées comportant une antenne (41) composée de sous-réseaux d'émission (42, A₁, ... A_{Q}) éclairant une même zone de l'espace et au moins un sous-réseau de réception (A_{R}), chaque sous-réseau ayant une position donnée dans ledit réseau, chaque sous-réseau d'émission émettant un signal ayant une caractéristique propre, l'ensemble des caractéristiques propres à chaque sous-réseau formant le code d'émissions multiples simultanées, la détection de cibles étant réalisée par l'émission d'une suite de rafales d'émissions multiples, ladite suite comportant au moins deux codes d'émission différents, des échos étant présents dans lobe principal (44, 46) et dans des lobes secondaires (45, 47) de la fonction d'ambiguïté, **caractérisé en ce que** ledit système :
- émet des codes différents (67) parmi au moins deux rafales, ladite émission conservant le lobe principal de la fonction d'ambiguïté mais orientant lesdits lobes secondaires de ladite fonction d'ambiguïté dans des directions différentes de rafale à rafale ;
- détecte les signaux (68) issus de chaque direction ;
- effectue l'association (69) des différents signaux (70) détectés dans chaque direction pour lesdites au moins deux rafales, ladite association réduisant le niveau des échos présents dans lesdits lobes secondaires (45,47) de la fonction d'ambiguïté.

2. Système de détection selon la revendication 1, **caractérisé en ce que** lesdits au moins deux codes d'émission sont consécutifs.

3. Système de détection selon l'une quelconque des revendications précédentes, **caractérisé en ce que** lesdits au moins deux codes sont répétés à l'intérieur de ladite suite de rafales.

4. Système de détection selon l'une quelconque des revendications précédentes, **caractérisé en ce que** l'émission comportant N codes différents, un par rafale, l'association est réalisée selon un critère « 2 sur N ».

5. Système de détection selon l'une quelconque des revendications précédentes, **caractérisé en ce que** l'émission comportant N codes différents, un par rafale, l'association est réalisée selon un critère « K sur N », K étant supérieur à 2.

6. Système de détection selon l'une quelconque des revendications précédentes, **caractérisé en ce que** l'association se fait selon un traitement du type « Compressed Sensing »,

7. Système de détection selon l'une quelconque des revendications précédentes, **caractérisés en ce que** l'association se fait selon un traitement du type maximum de vraisemblance.

8. Système de détection selon l'une quelconque des revendications précédentes, **caractérisé en ce qu'**un code d'émissions multiples simultanées est réalisé en attribuant à chaque sous-réseau d'émission une sous-bande de fréquence (43).

9. Système de détection selon l'une quelconque des revendications précédentes, **caractérisé en ce que** les centres de phase desdits sous-réseaux d'émission (42, A₁, ... A_{Q}) sont alignés selon un axe.

10. Système de détection selon l'une quelconque des revendications précédentes, **caractérisé en ce que** comportant plusieurs sous-réseaux de réception (A_{R}), lesdits sous-réseaux ne sont pas colocalisés, chaque sous-réseau de réception recevant les signaux issus des différentes émissions produites par lesdits sous-réseaux d'émission.

11. Système de détection selon l'une quelconque des revendications précédentes, **caractérisé en ce que** le système de détection est un radar.

12. Procédé de détection à émissions multiples simultanées utilisant une antenne (41) composée de sous-réseaux d'émission (42, A₁, ... A_{Q}) éclairant une même zone de l'espace et au moins un sous-réseau de réception (A_{R}), chaque sous-réseau ayant une position donnée dans ledit réseau, procédé dans lequel on attribue à chaque sous-réseau d'émission un signal d'émission ayant une caractéristique propre, l'ensemble des caractéristiques propres à chaque sous-réseau formant le code d'émissions multiples simultanées, la détection de cibles étant réalisée par l'émission d'une suite de rafales d'émissions multiples, ladite suite comportant au moins deux codes d'émission différents, des échos étant présents dans lobe principal (44, 46) et dans des lobes secondaires (45, 47) de la fonction d'ambiguïté, **caractérisé en ce que** :
- on émet des codes différents (67) parmi au moins deux rafales, ladite émission conservant le lobe principal de la fonction d'ambiguïté mais orientant lesdits lobes secondaires de ladite fonction d'ambiguïté dans des directions différentes de rafale à rafale ;
- on détecte les signaux (68) issus de chaque direction ;
- on effectue l'association (69) des différents signaux (70) détectés dans chaque direction pour lesdites au moins deux rafales, ladite association réduisant le niveau des échos présents dans lesdits lobes secondaires (45, 47) de la fonction d'ambiguïté.

13. Procédé de détection selon la revendication 12, **caractérisé en ce que** lesdits au moins deux codes d'émission sont consécutifs.

14. Procédé de détection selon l'une quelconque des revendications 12 à 13, **caractérisé en ce que** lesdits au moins deux codes sont répétés à l'intérieur de ladite suite de rafales.

15. Procédé de détection selon l'une quelconque des revendications 12 à 14, **caractérisé en ce que** l'émission comportant N codes différents, un par rafale, l'association est réalisée selon un critère « 2 sur N ».

16. Procédé de détection selon l'une quelconque des revendications 12 à 15, **caractérisé en ce que** l'émission comportant N codes différents, un par rafale, l'association est réalisée selon un critère « K sur N », K étant supérieur à 2.

17. Procédé de détection selon l'une quelconque des revendications 10 à 13, **caractérisé en ce que** l'association se fait selon un traitement du type « Compressed Sensing ».

18. Procédé de détection selon l'une quelconque des revendications 12 à 17, **caractérisé en ce que** l'association se fait selon un traitement du type maximum de vraisemblance.

19. Procédé selon l'une quelconque des revendications 12 à 18, **caractérisé en ce qu'**un code d'émissions multiples simultanées est réalisé en attribuant à sous-réseau (42, A₁, ... A_{Q}) une sous-bande de fréquence (43).

## Patentansprüche

1. Erkennungssystem mit mehreren gleichzeitigen Sendungen, umfassend eine Antenne (41) bestehend aus Sendesubnetzen (42, A₁, ... A_{Q}), die eine selbe Zone des Raums beleuchten, und wenigstens einem Empfangssubnetz (A_{R}), wobei jedes Subnetz eine gegebene Position in dem Netzwerk hat, wobei jedes Sendesubnetz ein Signal mit einer eigenen Eigenschaft emittiert, wobei der Satz von Eigenschaften jedes Subnetzes den Code von mehreren gleichzeitigen Sendungen bildet, wobei die Erkennung von Zielen durch Senden einer Reihe von mehreren Sendebursts realisiert wird, wobei die Reihe wenigstens zwei unterschiedliche Sendecodes umfasst, wobei Echos in der Hauptkeule (44, 46) und in den Nebenkeulen (45, 47) der Ambiguitätsfunktion vorliegen, **dadurch gekennzeichnet, dass** das System:
- verschiedene Codes (67) unter wenigstens zwei Bursts sendet, wobei die Sendung die Hauptkeule der Ambiguitätsfunktion konserviert, aber die Nebenkeulen der Ambiguitätsfunktion von Burst zu Burst in verschiedenen Richtungen orientiert;
- die aus jeder Richtung ausgegebenen Signale (68) erkennt;
- die Assoziation (69) der verschiedenen erkannten Signale (70) in jeder Richtung für die wenigstens zwei Bursts bewirkt, wobei die Assoziation den Pegel der Echos reduziert, die in den Nebenkeulen (45, 47) der Ambiguitätsfunktion vorliegen.

2. Erkennungssystem nach Anspruch 1, **dadurch gekennzeichnet, dass** die wenigstens zwei Sendecodes konsekutiv sind.

3. Erkennungssystem nach einem der vorherigen Ansprüche, **dadurch gekennzeichnet, dass** die wenigstens zwei Codes im Innern der Burstreihe wiederholt werden.

4. Erkennungssystem nach einem der vorherigen Ansprüche, **dadurch gekennzeichnet, dass**, wenn die Sendung N verschiedene Codes umfasst, einen pro Burst, die Assoziation gemäß einem Kriterium "2/N" realisiert wird.

5. Erkennungssystem nach einem der vorherigen Ansprüche, **dadurch gekennzeichnet, dass**, wenn die Sendung N verschiedene Codes umfasst, einen pro Burst, die Assoziaton gemäß einem Kriterium "K/N" realisiert wird, wobei K größer als 2 ist.

6. Erkennungssystem nach einem der vorherigen Ansprüche, **dadurch gekennzeichnet, dass** die Assoziation gemäß einer Behandlung des Typs "Compressed Sensing" erfolgt.

7. Erkennungssystem nach einem der vorherigen Ansprüche, **dadurch gekennzeichnet, dass** die Assoziation gemäß einer Behandlung des Maximum-Likelihood-Typs erfolgt.

8. Erkennungssystem nach einem der vorherigen Ansprüche, **dadurch gekennzeichnet, dass** ein Code von mehreren gleichzeitigen Sendungen realisiert wird, indem jedem Sendesubnetz ein Frequenzsubband (43) zugeordnet wird.

9. Erkennungssystem nach einem der vorherigen Ansprüche, **dadurch gekennzeichnet, dass** die Phasenzentren der Sendesubnetze (42, A₁, ... A_{Q}) entlang einer Achse ausgerichtet sind.

10. Erkennungssystem nach einem der vorherigen Ansprüche, **dadurch gekennzeichnet, dass**, wenn es mehrere Empfangssubnetze (A_{R}) umfasst, die Subnetze nicht kolokalisiert sind, wobei jedes Empfangssubnetz die Signale empfängt, die von den verschiedenen Sendungen ausgegeben wurden, die von den Empfangssubnetzen erzeugt wurden.

11. Erkennungssystem nach einem der vorherigen Ansprüche, **dadurch gekennzeichnet, dass** das Erkennungssystem ein Radar ist.

12. Erkennungssystem mit mehreren gleichzeitigen Sendungen, das eine Antenne (41) verwendet, bestehend aus Sendesubnetzen (42, A₁, ... A_{Q}), die eine selbe Zone des Raums beleuchten, und wenigstens einem Empfangssubnetz (A_{R}), wobei jedes Subnetz eine gegebene Position in dem Netzwerk hat, wobei in dem Verfahren jedem Sendesubnetz ein Sendesignal mit einer eigenen Eigenschaft zugeordnet wird, wobei die Gruppe von jedem Subnetz eigenen Eigenschaften mehrere gleichzeitige Sendecodes bildet, wobei die Erkennung von Zielen durch Senden einer Reihe von mehreren Sendebursts realisiert wird, wobei die Reihe wenigstens zwei verschiedene Sendecodes umfasst, wobei Echos in der Hauptkeule (44, 46) und in den Nebenkeulen (45, 47) der Ambiguitätsfunktion vorliegen, **dadurch gekennzeichnet, dass**:
- verschiedene Codes (67) unter wenigstens zwei Bursts gesendet werden, wobei die Sendung die Hauptkeule der Ambiguitätsfunktion konserviert, aber die Nebenkeulen der Ambiguitätsfunktion von Burst zu Burst in verschiedenen Richtungen orientiert;
- die aus jeder Richtung ausgegebenen Signale (68) erkannt werden;
- die Assoziation (69) der verschiedenen erkannten Signale (70) in jeder Richtung für die wenigstens zwei Bursts erfolgt, wobei die Assoziation den Pegel der Echos reduziert, die in den Nebenkeulen (45, 47) der Ambiguitätsfunktion vorhanden sind.

13. Erkennungsverfahren nach Anspruch 12, **dadurch gekennzeichnet, dass** die wenigstens zwei Sendecodes konsekutiv sind.

14. Erkennungsverfahren nach einem der Ansprüche 12 bis 13, **dadurch gekennzeichnet, dass** die wenigstens zwei Codes im Innern der Burstreihe wiederholt werden.

15. Erkennungsverfahren nach einem der Ansprüche 12 bis 14, **dadurch gekennzeichnet, dass**, wenn die Sendung N verschiedene Codes umfasst, einen pro Burst, die Assoziation gemäß einem Kriterium "2/N" realisiert wird.

16. Erkennungsverfahren nach einem der Ansprüche 12 bis 15, **dadurch gekennzeichnet, dass**, wenn die Sendung N verschiedene Codes umfasst, einen pro Burst, die Assoziaton gemäß einem Kriterium "K/N" erfolgt, wobei K größer als 2 ist.

17. Erkennungsverfahren nach einem der Ansprüche 10 bis 13, **dadurch gekennzeichnet, dass** die Assoziation gemäß einer Behandlung des Typs "Compressed Sensing" erfolgt.

18. Erkennungsverfahren nach einem der Ansprüche 12 bis 17, **dadurch gekennzeichnet, dass** die Assoziation gemäß einer Behandlung des Maximum-Likelihood-Typs erfolgt.

19. Verfahren nach einem der Ansprüche 12 bis 18, **dadurch gekennzeichnet, dass** ein Code von mehreren gleichzeitigen Sendungen realisiert wird, indem dem Subnetz (42, A₁, ... A_{Q}) ein Frequenzsubband (43) zugeordnet wird.

## Claims

1. Detection system with simultaneous multiple transmissions including an antenna (41) composed of transmission sub-arrays (42, A₁, ... A_{Q}) illuminating one and the same zone of the space and at least one reception sub-array (A_{R}), each sub-array having a given position in said array, each transmission sub-array transmitting a signal having a specific characteristic, the set of characteristics specific to each sub-array forming the simultaneous multiple transmission code, the detection of targets being performed by the transmission of a series of bursts of multiple transmissions, said series including at least two different transmission codes, echoes being present in the main lobe (44, 46) and in the sidelobes (45, 47) of the ambiguity function, **characterized in that** said system:
- transmits different codes (67) from among at least two bursts, said transmission preserving the main lobe of the ambiguity function but orienting said sidelobes of said ambiguity function in different directions from burst to burst;
- detects the signals (68) originating from each direction;
- carries out the aggregation (69) of the different signals (70) detected in each direction for said at least two bursts, said aggregation reducing the level of the echoes present in said sidelobes (45, 47) of the ambiguity function.

2. Detection system according to Claim 1, **characterized in that** said at least two transmission codes are consecutive.

3. Detection system according to any one of the preceding claims, **characterized in that** said at least two codes are repeated within said series of bursts.

4. Detection system according to any one of the preceding claims, **characterized in that**, since the transmission includes N different codes, one per burst, the aggregation is performed according to a "2 of N" criterion.

5. Detection system according to any one of the preceding claims, **characterized in that** since the transmission includes N different codes, one per burst, the aggregation is performed according to a "K of N" criterion, K being greater than 2.

6. Detection system according to any one of the preceding claims, **characterized in that** the aggregation is made according to processing of the "Compressed Sensing" type.

7. Detection system according to any one of the preceding claims, **characterized in that** the aggregation is made according to processing of the maximum likelihood type.

8. Detection system according to any one of the preceding claims, **characterized in that** a simultaneous multiple transmission code is produced by attributing a frequency sub-band to each transmission sub-array (43).

9. Detection system according to any one of the preceding claims, **characterized in that** the phase centres of said transmission sub-arrays (42, A₁, ... A_{Q}) are aligned on an axis.

10. Detection system according to any one of the preceding claims, **characterized in that** including several reception sub-arrays (A_{R}), said sub-arrays are not co-located, each reception sub-array receiving the signals originating from the different transmissions produced by said transmission sub-arrays.

11. Detection system according to any one of the preceding claims, **characterized in that** the detection system is a radar.

12. Detection method with simultaneous multiple transmissions using an antenna (41) composed of transmission sub-arrays (42, A₁, ... A_{Q}) illuminating one and the same zone of the space and at least one reception sub-array (A_{R}), each sub-array having a given position in said array, a method in which to each transmission sub-array is attributed a transmission signal having a specific characteristic, the set of characteristics specific to each sub-array forming the simultaneous multiple transmission code, the detection of targets being performed by the transmission of a series of bursts of multiple transmissions, said series including at least two different transmission codes, echoes being present in the main lobe (44, 46) and in the sidelobes (45, 47) of the ambiguity function, **characterized in that**:
- different codes (67) are transmitted from among at least two bursts, said transmission preserving the main lobe of the ambiguity function but orienting said sidelobes of said ambiguity function in different directions from burst to bu rst;
- the signals (68) originating from each direction are detected;
- the aggregation (69) is made of the different signals (70) detected in each direction for said at least two bursts, said aggregation reducing the level of the echoes present in said sidelobes (45, 47) of the ambiguity function.

13. Detection method according to Claim 12, **characterized in that** said at least two transmission codes are consecutive.

14. Detection method according to any one of Claims 12 and 13, **characterized in that** said at least two codes are repeated within said series of bursts.

15. Detection method according to any one of Claims 12 to 14, **characterized in that**, since the transmission includes N different codes, one per burst, the aggregation is performed according to a "2 of N" criterion.

16. Detection method according to any one of Claims 12 to 15, **characterized in that** since the transmission includes N different codes, one per burst, the aggregation is performed according to a "K of N" criterion, K being greater than 2.

17. Detection method according to any one of Claims 10 and 13, **characterized in that** the aggregation is made according to processing of "Compressed Sensing" type.

18. Detection method according to any one of Claims 12 to 17, **characterized in that** the aggregation is made according to processing of maximum likelihood type.

19. Method according to any one of Claims 12 to 18, **characterized in that** a simultaneous multiple transmission code is performed by attributing a frequency sub-band (43) to each sub-array (42, A₁, ... A_{Q}).
